# EUROPEAN PATENT APPLICATION

(11) **EP 4 657 343 A1**
(43) Date of publication of application: **03.12.2025**
(21) Application number: 24178253.1
(22) Date of filing: 27.05.2024
(51) Int. Cl.: G06Q 10/06, B26D 5/00, G06Q 10/0631, G06Q 10/101

(54) **SYSTEM AND METHOD OF PROVIDING AN INTERACTIVE PRINT JOB VIRTUAL CUSTOMER SERVICE REPRESENTATIVE**

(71) Applicant: Esko Software BV, 9051 Ghent (BE)
(72) Inventor: Goossens, Rian, CH-8105 Regensdorf (CH)
(74) Representative: Jonas, Hans-Hermann

(57) **Abstract**

A system and method for providing a virtual customer service representative (CSR) for interacting with a customer in need of a print job. Text is extracted from an electronic document defining content of the print job, and based at least in part thereon, the VirtualCSR engages in an interactive dialog with the customer regarding characteristics of the print job. A job editing interaction displays images and receives feedback from the customer to define a final appearance of the print job. Data is passed to a module that generates a plurality of print job scenarios, and a subset of scenarios above a certain prioritization focus ranking threshold is presented to the customer, from which the customer selects a final print job scenario that is the basis for the print job commissioned by the VirtualCSR in connection with the document.

## Description

### BACKGROUND OF THE INVENTION

Print job production workflows typically comprise a plurality of steps using a plurality of machines, and the permutations and combinations of options available to the print job customer to achieve a certain print job product may be overwhelming in number. Customers typically do not have a detailed understanding of all of the variables that go into create a final print product, and therefore the print job customer typically has an interaction with a human customer service representative (CSR) to specify the details of the job. Even in the print industry, the professionals having the specific knowledge to serve as a CSR are often highly experienced and in high demand.

Because there are so many variables that go into the printing process, even the most highly skilled human CSR does not have the time required to walk each customer through all of the possible permutations and combinations of print job scenarios that can achieve an equivalent print product appearance. And, each customer (and each job) may have different prioritizations for balancing cost, quality, speed, waste, and other environmental factors. Decisions made at the beginning of the process regarding packaging geometry and materials may have large impacts on overall cost and environmental impact, taking into account shipping.

Various types of software are known and available for helping print job customers design a job. For example, palletization software, such as Esko^{®} Cape Pack^{™} software is configured to enable users to optimize primary product size for shipping, create new case sizes, build efficient pallet patterns, analyze compression strength of cases and pallets, and improve material and cube utilization. Planning and estimating software, such as Esko^{®} Phoenix^{™} Al-powered planning and estimating software (sold by Esko Software BVBA and described in more detail in U.S. Pat. No. 11,890,775, titled AUTOMATING THE PLANNING, ESTIMATING, AND IMPOSITIONING OF PRINTER ORDERS VIA MULTI-STEP CUTTING, incorporated herein by reference) are known for imposition and estimating, particularly for workflows with multiple cutting steps. Phoenix software leverages artificial intelligence (Al) to analyze historical production data, including machine capabilities, job complexity, and material usage, to generate accurate and detailed cost estimates from a multiplicity of potential impositions and cutting schemes. Color management software, such as Esko^{®} Equinox^{™} (sold by Esko^{®}) has functionality for evaluating relative costs/efficiencies of specifying a print job with more/less/different blends of color inks. Each of these software modules typically runs separate and apart from the print job onboarding process, meaning that most of the relevant design decisions have already been made using such software prior to the print job onboarding. For customers with particular sensitivity to or desire to optimize cost, quality, time, environmental impact, or other attributes of the process, the ability to weigh each of these aspects against different potential print job scenarios is currently very difficult and tedious.

Accordingly, there is a need in the field to provide assistance to print job customers during the onboarding process of a new print job, as well as a desire to provide meaningful comparative information for making intelligent design decisions that can optimize the print job with respect to the priorities of each customer associated with each job.

### SUMMARY OF THE INVENTION

An aspect of the invention relates to a computerized system for providing a virtual customer service representative (CSR) for interacting with a customer in need of a print job. The system comprises a first processor connected to a computer memory, a user interface, a display, and a communications interface connected to a communications network. The computer memory is programmed with machine-readable instructions and includes one or more databases accessible to the computer. The one or more databases comprise database information characterizing attributes of one or more aspects of a potential workflow for a printing job. The machine-readable instructions include instructions for causing the processor to perform the method steps of receiving an electronic document defining the print job via the at least one input of the communications interface; extracting text from the electronic document defining content of the print job; and based at least in part upon the text from the electronic document, engaging in an interactive dialog with the customer regarding one or more characteristics of the print job. The interactive dialog includes the processor presenting a series of queries to the customer and the customer providing a response to each query until the processor has collected a data set from the customer that ,in combination with database information from the one or more databases, comprises characteristic data sufficient to evaluate a plurality of print job scenarios with respect to at least one attribute of at least one aspect of the potential workflow. The instructions also cause the processor to engage in a job editing interaction with the customer, by providing a visualization to the customer on the display in the form of one or more images each depicting at least one portion of at least one layer corresponding to the print job and receiving from the customer via the user interface feedback accepting, rejecting, or selecting an adjustment to the visualization based upon each of the one or more images, until data associated with a final appearance of the product corresponding to the print job has been defined and added to the characteristic data. The instructions cause the processor to pass at least a portion of the characteristic data to one or more modules, each module configured to use the passed portion of the characteristic data to generate the plurality of print job scenarios with respect to at least one aspect of the print job workflow based upon at least one prioritization focus. The instructions cause the processor to then receive from at least one module information relating to each of the plurality of print job scenarios configured to produce the final appearance of the product, along with prioritization focus information corresponding to each print job scenario, and present at least a subset of the print job scenarios above a certain prioritization focus ranking threshold to the customer for consideration. Upon receiving from the customer via the user interface an identification of a selected final print job scenario from the subset presented; the processor is programmed to associate the selected final print job scenario with the print job document and commission an order for completion of the print job in accordance with the selected final print job scenario.
In embodiments, the one or more aspects may be selected from the group consisting of: printing equipment, printing lines, printing shops, and print substrate media, and/or the one or more attributes may be selected from the group consisting of: operational cost, environmental impact, production speed, production quality, and risk factors, and in particular, may include environmental impact expressed as a carbon footprint score representing carbon dioxide emissions efficiency. The at least one portion of the print job workflow may be selected from the group consisting of: package geometry design, imposition, cutting, color management, and print feature generation. The at least one prioritization focus may be selected from the group consisting of: cost efficiency, environmental impact, waste minimization, and print quality.

In embodiments, the electronic document comprises a PDF, and extracting the text from the document includes rendering the PDF with a PDF render library and sending the rendering to a large language model (LLM) having a framework for vision-centric tasks. In embodiments, the print job comprises printed product packaging or a printed product label. In embodiments, each of the one or more modules comprises a second processor connected to the communications network, wherein passing the characterization data to each of the one or more modules is performed by making an application program interface (API) call via the communication interface over the communications network. The one or more modules may be selected from the group consisting of: a palletization module, a planning and estimating module, and a color management module.

In embodiments, the processor is configured to engage in the job editing interaction with the customer by facilitating customer selection of a base appearance for the visualization and identification of one or more elements within the visualization intended to have an appearance different from the base appearance. The identification of each element intended to have an appearance different from the base appearance may be received by the processor from the user interface by a click from a cursor control user interface, a geometric shape drawn around the element using a cursor control user interface, or a text description received via the user interface.

Another aspect of the invention relates to a computer assisted method for providing a virtual customer service representative (CSR) for interacting with a customer in need of a print job, including providing a system as described hereinabove. The method further includes receiving the electronic document defining the print job via the at least one input of the communications interface; extracting the text from the electronic document defining the content of the print job; and based at least in part upon the text extracted from the electronic document, engaging in an interactive dialog with the customer regarding one or more characteristics of the print job until the processor has collected the data set from the customer that in combination with database information from the one or more databases comprises the characteristic data. The method also includes engaging in the job editing interaction with the customer, including providing the visualization to the customer on the display in the form of the one or more images each depicting the at least one portion of the at least one layer corresponding to the print job and receiving from the customer via the user interface the feedback accepting, rejecting, or selecting an adjustment to the visualization based upon each of the one or more images, until the data associated with a final appearance of the product corresponding to the print job has been defined and added to the characteristic data. At least the portion of the characteristic data is passed to the one or more modules, and each module uses the passed portion to generate the plurality of print job scenarios with respect to the at least one aspect of the print job workflow based upon the at least one prioritization focus. Information relating to each of the plurality of print job scenarios configured to produce the final appearance of the product is received from the at least one module, along with the prioritization focus information corresponding to each print job scenario. At least the subset of the print job scenarios above a certain prioritization focus ranking threshold are presented to the customer for consideration and the identification of the selected final print job scenario from the subset presented is received from the customer via the user interface. The selected final print job scenario is associated with the print job document and an order for completion of the print job is commissioned in accordance with the selected final print job scenario.

Still another aspect of the invention relates to non-transitory machine-readable media programmed with machine-readable instructions for causing a processor connected to and configured to read the machine-readable media to execute a method for providing a virtual customer service representative (CSR) for interacting with a customer in need of a print job as described hereinabove.

### BRIEF DESCRIPTION OF THE DRAWINGS

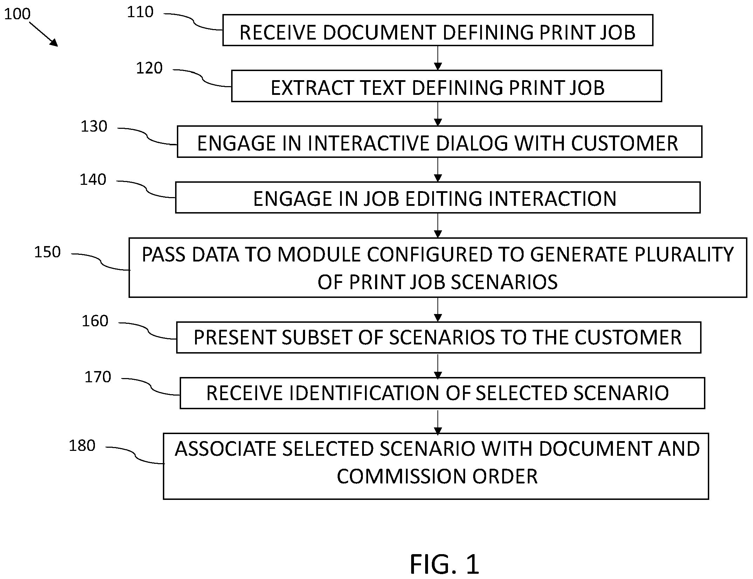

FIG. 1 is a flowchart showing steps of an exemplary method aspect of the invention.
FIG. 2 is a schematic illustration of an exemplary system embodiment of the invention.

### DETAILED DESCRIPTION OF THE INVENTION

Described herein is a virtual CSR tool designed to support printer sales personnel or CSRs in their interactions with brand customers, or potentially even serve as a standalone customer interface. Its primary objective is to reduce the time taken from receiving an initial print job order to providing an actual price quote, while also translating customer requirements into technical specifications, whenever feasible.

To accomplish this, embodiments of the tool may integrate multiple components, each of which may have advantages standing alone as well.

As a general construct, aspects of the invention include a computer system 200, configured to receive a document 210 defining a print job, which is typically a graphic artwork document containing a combination of graphics 212 and text 214, such as for making product packaging, such as a label. The computer may be part of a computer network, including a local computer system 220 comprising computer memory / processor 222, output devices, such as but limited to display 224 and audio speaker 226, and a user interface 230, including but not limited to a mouse (or other cursor control device) 234 and a keyboard 236. It should be understood that the depiction of certain icons that form part of the user interface 230 are exemplary only, and the user interface may comprise any and all components known in the art, or combinations thereof, for providing user input to a computer system, including touchscreens, touchpads, voice controls (microphones) 238, and the like. Local computer system 220 is typically connected via a communications link (signified by output arrow 260 and input arrow 261) to a computer network, which may be a local network, or a global communications network, with other computer systems 240 or components remotely located, such as processor 210 and connected memory 242. As referred to herein, the term "computer system" refers to systems 220 and/or 240, without limitation, unless specifically stated otherwise. It should be understood that the processor and memory (programmed with database information and/or machine readable instructions for causing the processor to perform certain method steps) as described herein may comprise any combination of processors and memory located locally and/or remotely (i.e. in the cloud providing non-downloadable Software as a Service (SAAS)). The local and/or remote processor and memory may be further connected via the network (signified by arrows 270) to additional modules 250 (which may have its own processor 251 and memory 252) specially programmed to provide certain functions as described later herein and accessible, for example, by an Application Program Interface (API) call from one system to another. It should be understood, however, that the modules may comprise portions of the same system as the other processing and memory components.

### Document Analysis

A document 210 embodied as computer file (most typically a portable document file (PDF) document) may be analyzed in any one or more of several methods. For example, the document may be rendered by a PDF render library (i.e. running on computer system 220, 240) and sent to a language model (also running on computer system 220, 240), such as a large language model (LLM) having a framework for vision-centric tasks, referred to as a VisionLLM model, such as ChatGPT-4 OCR. Using text 214 extracted from the PDF combined with documents from converters, the VirtualCSR module (which constitutes machine readable instructions stored on one or both 222, 224 for causing one or both processors 222, 241 to perform various method steps as described herein) may now interact with the customer with a dialogue (e.g. a visible question and answer dialog using the keyboard 236 and display 224 and/or an audible dialog using microphone 238 and speaker 226) seeking more information about the document and the eventual final product (e.g. product packaging or a product label) to be produced by the print job. Exemplary questions may include (but are not limited to):
- What type of product category is this? (e.g. food, medicine, electronics, chemicals)
- What type of materials are typically used for this type of packaging? (e.g. corrugated cardboard, paper web, paper sheets, aluminum cans, etc.)
- Do the dimensions corresponding to the job defined by the document match the weight to be printed on the package, given the contained item?

### LLM driven actions with Databases and Application Program Interfaces (API's)

Certain existing and potential API calls 270 may be very helpful for use by the VirtualCSR to perform a quote. For example, the VirtualCSR may call one or more exemplary modules 250 relating to palletization, planning and estimating, and color management. The palletization module may comprise, for example, Esko^{®} Cape Pack^{™} palletization software. Such software may be consulted by the VirtualCSR to help in suggesting sizing for packaging that is efficient for shipping. The planning and estimating module may include Esko^{®} Phoenix^{™} software, and the color management software may include Esko^{®} Equinox^{™} software.

An LLM can be connected to such modules accessed by API calls, as well as to databases containing relevant customer information. Depending on the package viewed in the document analysis, and questions asked by the user, API calls can be made to suggest edits to the package and to answer certain questions.

While API calls are an efficient manner in which to obtain the information from pre-existing programs, it should be understood that in other embodiments, the various modules may comprise integrated portions of the VirtualCSR programming without relying on external programs and communications therewith.

### Appearance Based Editor with Smart Segmentation

Typical state-of-the-art editing software is based around the printing process. For example, if a white underprint ink layer is recommended by the graphic designer, that ink layer is typically included in the PDF corresponding to the print job. Because the end-use customer may have very little knowledge of the printing process, a simpler approach is desirable. The end customer typically knows what the package should look like. The customer may indicate, for example, that the full package needs to be glossy, except for a certain element. The customer may want to make some element of the print job metallic or embossed, or add a window somewhere, and the like.

An exemplary appearance-based job editing software module may, for example, start with selection of a base look (e.g. glossy, metallic, matte, etc.) Separations (i.e. for different inks) may be individually marked with a certain appearance.

Elements (i.e. graphic file objects) 225 may be selected by the user via user interface 230 to be marked with a certain appearance (i.e. a glossy element over a matte base, or vice versa). Elements may be selected through various means: by single clicking, drawing, describing in text, drawing a geometric shape (e.g. circle, ellipse, rectangle) 226 around the element, etc. using the user interface. Technically, this functionality may be achieved by one or more of the following techniques:
Vector based techniques may conform to traditional selection techniques feature in vector based programs, including inclusive selection, exclusive selection, taking into account presence or absence of masks, etc.
Raster based techniques may conform to traditional methods for making selections based on edge detection and flood fill techniques.
Modern techniques may also be used, such as first making a segmentation mask with a machine learning model like SAM (Segment Anything Model) and then making those segmentations selectable by the user.
Text based techniques, such as featuring machine learning methods, like SAM, can also provide masks given a textual description, which offers a way for an LLM system to select an object through a textual API call, offering automatic suggestions.

### Visualization

Packages made in accordance with the foregoing techniques can be visualized in a number of ways. A number of appearance images can be rendered and displayed on display 224, each describing one aspect of the appearance (e.g. glossiness, metallicness, transparency, thickness). The visualization may be configured to pass through the separation and selected object stack from bottom to top, displaying each separation and object and allowing the user to adjust the necessary appearance images based upon the appearance of the separation or object and its alpha mask.

The final result includes an RGB render and the appearance images, which may be combined into a 3D view by using techniques such as Physically Based Rendering (PBR) that includes modeling of lights and surfaces with optics, to visualize for glossiness and metallicness, vertex displacement, parallax mapping for thickness, and the like. Optionally some appearance images may work in a more complicated manner. For example, when adding embossing to an element, a user may desire for the visualization to work more dynamically. For example, a depth estimating neural network might be used to turn an RGB render into a heightmap, which can be sampled whenever an item gets marked as embossed/debossed.

### Translating Appearance into Technical Layers

Once an appearance has been selected for a package, it needs to be prepared for printing. Depending on the appearance and a set of rules, multiple possible combinations may be feasible. For example, a matte package with a metallic emblem on it could be made in multiple ways, including but not limited to (a) using a matte substrate with inks disposed on the substrate and a metallic foil disposed on the inks, and (b) using a metallic substrate, with matte white underprint everywhere except the emblem, with inks printed over the underprint. The considerations may be more specific as well, such as comparing the use of different types of foils, comparing physical embossing versus use of tactile inks, and the like.

Finally an optimal choice may be selected based upon various criteria, such as eco-friendliness (discussed in more detail below), cost, and quality. This optimization can be performed through the use of tools like Phoenix, using API calls.

### Optimization Based upon Environmental Considerations (i.e. eco-friendliness)

U.S. Pat. No. 11,890,775 (the '775 Patent), referenced herein above describes, among other things, a system of industrial print job imposition comprising a processor, a display, and a memory including instructions executed by the processor. Although specific to systems that employs cutters to cut the media on which the job is printed, the general concepts as described therein can be extrapolated to any type of industrial print job workflow and associated machines and manufacturing techniques. The functionality to rank a plurality of schemes based on a predicted efficiency can be extended to consideration of not only economic cost, but also environmental impact, such as for example but not limited to, the carbon footprint associated with adopting a particular print job scenario. For example, the instructions, when executed may cause the processor to receive a print order including a requisite number of print products and to receive a specification of available equipment (e.g. cutters, printing apparatus, other conversion apparatus), the specification including characteristics of the equipment associated with the print products in the print order. The processor generates a plurality of planning schemes, each planning scheme combining a printing apparatus and other equipment (including but not limited to cutters) needed to product the order, from the specification of available equipment. The processor then ranks the plurality of planning schemes based on a predicted efficiency based on the specification of available equipment and respective printing apparatus, wherein the rank is based on a predicted efficiency of a prioritization focus; and then renders a ranked list of planning schemes on the display.

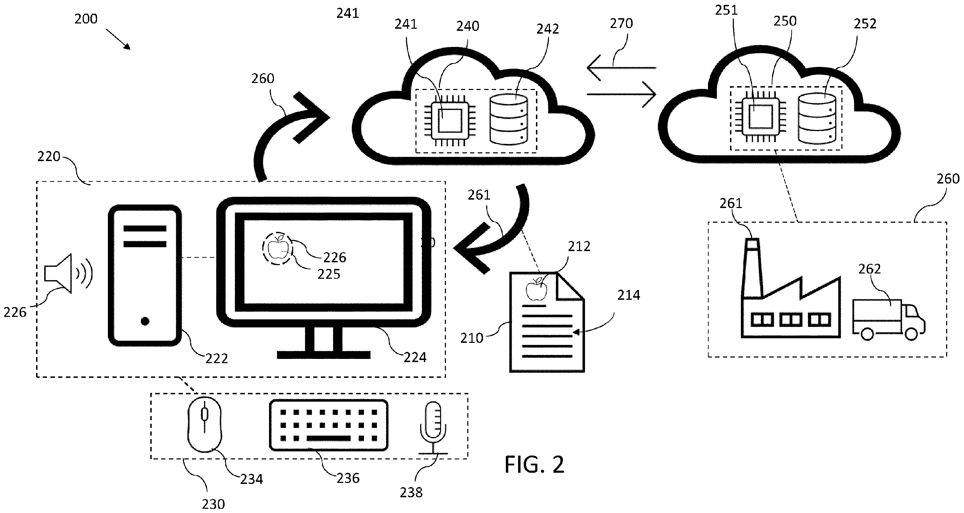

The prioritization focus may be any type of focus of interest to the end customer, including environmental considerations, such as predicted carbon dioxide efficiency. While the `775 patent specifically mentions "waste" as one available prioritization focus, waste is only one component of computing a true environmental cost. Computing carbon emissions for use as an efficiency focus, may include computing a carbon footprint score representing carbon dioxide emissions efficiency. In such embodiments, the specification of available equipment may include specification of a carbon footprint value representing an amount of carbon dioxide emissions associated with energy required to operate the available equipment (as signified by factory 261 in Fig. 2) in accordance with each possible workflow scheme. The programmed instructions may further cause the processor to receive a carbon footprint value corresponding to carbon emissions associated with each unit of media consumed, wherein the predicted efficiency comprises a carbon dioxide emissions efficiency and the prioritization focus comprises a total carbon footprint value associated with each of the plurality of planning schemes.

Thus, the VirtualCSR may be configured to suggest options to the user including environmental considerations (signified by information block 260, accessed by module 250, but the data flow is not limited to any particular mode of accessing the information), including but not limited to carbon footprint, that allows the customer to take into account the carbon emissions associated with the energy supply at each candidate printing location 261 (i.e. the ratio of clean energy to carbon-based energy), the emissions related to the logistics (signified by delivery truck 262) of delivering the printed product from the printing location to the customer location, and the like. Thus, the selection of printing scheme may also take into account geographic considerations corresponding to the print shops available to perform the tasks needed for a particular scenario and rank the options by cost, speed of delivery, environmental impact, and other factors, such as disruption risks from war or catastrophe, and the like.

It should be understood that a carbon footprint value is only one type of a "true cost factor" associated with a particular print job, and only one type of the narrower subset of environmental cost (eco-cost) factors, generally. The true cost factor is not limited to eco-cost factors, and the eco-cost factors are not limited to CO2 emissions but may take into account other pollutants emitted by the manufacturing locations. The true cost may take into account other "externalities" not traditionally captured by consideration of typical monetary manufacturing cost factors. Thus, a carbon score is only one example of additional factors beyond simple cost factors that may be included in the characteristics associated with each machine, media, printing technique, printing location, or printing technology. The methodology for calculating the various factors may use any methodology desired by the end user, or selected by the programmers of the VirtualCSR that are considered to have value and that are consistent and predictable.

Thus, the steps of an exemplary computer assisted method 100 for providing a virtual customer service representative (CSR) for interacting with a customer in need of a print job according to aspects of the invention are depicted in FIG. 2. The method is typically performed on a computer system as described herein, which is provided to (and/or to which access is provided to) the customer. In step 110, the system 200 receives the electronic document 210 defining the print job via the at least one input of the communications interface 261. In step 120, the processor 222, 241 extracts the text 214 from the electronic document 210 defining the content of the print job. In step 130, based at least in part upon the text extracted from the electronic document, the processor 222, 241 engages in an interactive dialog with the customer (e.g. via display 224 and user interface 230) regarding one or more characteristics of the print job until the processor has collected the data set from the customer that in combination with database information from the one or more databases comprises the characteristic data. In step 140, the processor 222, 241 engages in a job editing interaction with the customer, including providing the visualization to the customer on the display 224 in the form of the one or more images 225 each depicting the at least one portion of the at least one layer corresponding to the print job and receiving from the customer via the user interface 230 feedback accepting, rejecting, or selecting an adjustment to the visualization based upon each of the one or more images, until the data associated with a final appearance of the product corresponding to the print job has been defined and added to the characteristic data.

In step 150, the processor 222, 241 passes at least a portion of the characteristic data (e.g. via data transfer 270, which may be an API call) to the one or more modules 250, and each module use the passed portion of the characteristic data to generate a plurality of print job scenarios with respect to the at least one aspect of the print job workflow based upon the at least one prioritization focus (e.g. environmental factors based on environmental information 260 about the processing and/or logistical equipment involved in each workflow). In step 160, the processor 222, 241 receives from the at least one module 250 the information relating to each of the plurality of print job scenarios configured to produce the final appearance of the product, along with the prioritization focus information corresponding to each print job scenario, and at least a subset of the print job scenarios above a certain prioritization focus ranking threshold is presented to the customer for consideration (e.g. on display 224). In step 170, the processor 222, 241 receives from the customer (i.e. via the user interface 230) the identification of the selected final print job scenario from the subset presented. In step 180, the processor 222, 241 associates the selected final print job scenario with the print job document, and commissions an order for completion of the print job (i.e. by a printing workflow corresponding to information 160) in accordance with the selected final print job scenario. Additional (or fewer) steps may be performed as part of the workflow associated with the VirtualCSR

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A computerized system for providing a virtual customer service representative (CSR) for interacting with a customer in need of a print job, the system comprising:
a first processor connected to a computer memory, a user interface, a display, and a communications interface connected to a communications network, the computer memory programmed with machine-readable instructions and comprising one or more databases accessible to the computer, the one or more databases comprising database information characterizing attributes of one or more aspects of a potential workflow for a printing job, the machine-readable instructions including instructions for causing the processor to perform the method steps of:
a) receiving an electronic document defining the print job via the at least one input of the communications interface;
b) extracting text from the electronic document defining content of the print job;
c) based at least in part upon the text from the electronic document, engaging in an interactive dialog with the customer regarding one or more characteristics of the print job, the interactive dialog comprising the processor presenting a series of queries to the customer and the customer providing a response to each query until the processor has collected a data set from the customer that in combination with database information from the one or more databases comprises characteristic data sufficient to evaluate a plurality of print job scenarios with respect to at least one attribute of at least one aspect of the potential workflow;
d) engaging in a job editing interaction with the customer, by providing a visualization to the customer on the display in the form of one or more images each depicting at least one portion of at least one layer corresponding to the print job and receiving from the customer via the user interface feedback accepting, rejecting, or selecting an adjustment to the visualization based upon each of the one or more images, until data associated with a final appearance of the product corresponding to the print job has been defined and added to the characteristic data;
e) passing at least a portion of the characteristic data to one or more modules, each module configured to use the passed portion of the characteristic data to generate the plurality of print job scenarios with respect to at least one aspect of the print job workflow based upon at least one prioritization focus;
f) receiving from at least one module information relating to each of the plurality of print job scenarios configured to produce the final appearance of the product, along with prioritization focus information corresponding to each print job scenario, and presenting at least a subset of the print job scenarios above a certain prioritization focus ranking threshold to the customer for consideration;
g) receiving from the customer via the user interface an identification of a selected final print job scenario from the subset presented; and
h) associating the selected final print job scenario with the print job document and commissioning an order for completion of the print job in accordance with the selected final print job scenario.

2. The system of claim 1, wherein the one or more aspects are selected from the group consisting of: printing equipment, printing lines, printing shops, and print substrate media.

3. The system of claim 1 or claim 2, wherein the one or more attributes are selected from the group consisting of: operational cost, environmental impact, production speed, production quality, and risk factors.

4. The system of any one of the foregoing claims, wherein the at least one portion of the print job workflow is selected from the group consisting of: package geometry design, imposition, cutting, color management, and print feature generation.

5. The system of any one of the foregoing claims, wherein the at least one prioritization focus is selected from the group consisting of: cost efficiency, environmental impact, waste minimization, and print quality.

6. The system of any one of the foregoing claims, wherein the electronic document comprises a PDF.

7. The system of claim 6, wherein extracting the text from the document includes rendering the PDF with a PDF render library and sending the rendering to a large language model (LLM) having a framework for vision-centric tasks.

8. The system of any one of the foregoing claims, wherein the print job comprises printed product packaging or a printed product label.

9. The system of any one of the foregoing claims, wherein each of the one or more modules comprises a second processor connected to the communications network, wherein passing the characterization data to each of the one or more modules is performed by making an application program interface (API) call via the communication interface over the communications network.

10. The system any one of the foregoing claims, wherein the one or more modules are selected from the group consisting of: a palletization module, a planning and estimating module, and a color management module.

11. The system of any one of the foregoing claims, wherein the processor is configured to engage in the job editing interaction with the customer by facilitating customer selection of a base appearance for the visualization and identification of one or more elements within the visualization intended to have an appearance different from the base appearance.

12. The system of claim 11, wherein the identification of each element intended to have an appearance different from the base appearance is received by the processor from the user interface by a click from a cursor control user interface, a geometric shape drawn around the element using a cursor control user interface, or a text description received via the user interface.

13. The system of any one of the foregoing claims, wherein the one or more attributes includes environmental impact expressed as a carbon footprint score representing carbon dioxide emissions efficiency.

14. A computer assisted method for providing a virtual customer service representative (CSR) for interacting with a customer in need of a print job, the method comprising the steps of:
a) providing the system of any one of claims 1-13,
b) receiving the electronic document defining the print job via the at least one input of the communications interface;
c) extracting the text from the electronic document defining the content of the print job;
d) based at least in part upon the text extracted from the electronic document, engaging in an interactive dialog with the customer regarding one or more characteristics of the print job until the processor has collected the data set from the customer that in combination with database information from the one or more databases comprises the characteristic data;
e) engaging in the job editing interaction with the customer, including providing the visualization to the customer on the display in the form of the one or more images each depicting the at least one portion of the at least one layer corresponding to the print job and receiving from the customer via the user interface the feedback accepting, rejecting, or selecting an adjustment to the visualization based upon each of the one or more images, until the data associated with a final appearance of the product corresponding to the print job has been defined and added to the characteristic data;
f) passing the at least a portion of the characteristic data to the one or more modules, and each module using the passed portion of the characteristic data to generate the plurality of print job scenarios with respect to the at least one aspect of the print job workflow based upon the at least one prioritization focus;
g) receiving from the at least one module the information relating to each of the plurality of print job scenarios configured to produce the final appearance of the product, along with the prioritization focus information corresponding to each print job scenario, and presenting at least the subset of the print job scenarios above a certain prioritization focus ranking threshold to the customer for consideration;
h) receiving from the customer via the user interface the identification of the selected final print job scenario from the subset presented; and
i) associating the selected final print job scenario with the print job document and commissioning an order for completion of the print job in accordance with the selected final print job scenario.

15. Non-transitory machine-readable media programmed with machine-readable instructions for causing a processor connected to and configured to read the machine-readable media to execute a method for providing a virtual customer service representative (CSR) for interacting with a customer in need of a print job, the method comprising the steps of:
a) receiving an electronic document defining a print job;
b) extracting text from the electronic document defining content of the print job;
c) based at least in part upon the text from the electronic document, engaging in an interactive dialog with a customer via a user input connected to the processor, the interactive dialog comprising presenting a series of queries regarding one or more characteristics of the print job, and receiving a corresponding series of responses until a data set has been collected that in combination with database information from one or more databases connected to the processor comprises characteristic data sufficient to evaluate a plurality of print job scenarios with respect to at least one attribute of at least one aspect of a potential workflow for completing the print job;
d) engaging in a job editing interaction with the customer, by providing a visualization to the customer on the display in the form of one or more images each depicting at least one portion of at least one layer corresponding to the print job and receiving from the customer via the user interface feedback accepting, rejecting, or selecting an adjustment to the visualization based upon each of the one or more images, until data associated with a final appearance of the product corresponding to the print job has been defined and added to the characteristic data;
e) passing at least a portion of the characteristic data to at least one module configured to use the passed portion of the characteristic data to generate the plurality of print job scenarios with respect to at least one aspect of the print job workflow based upon at least one prioritization focus;
f) receiving from the at least one module information relating to each of the plurality of print job scenarios configured to produce the final appearance of the product, along with prioritization focus information corresponding to each print job scenario, and presenting at least a subset of the print job scenarios above a certain prioritization focus ranking threshold to the customer for consideration;
g) receiving from the customer via the user interface an identification of a selected final print job scenario from the subset presented; and
h) associating the selected final print job scenario with the print job document and commissioning an order for completion of the print job in accordance with the selected final print job scenario.
